# EUROPEAN PATENT APPLICATION

(11) **EP 4 764 505 A1**
(43) Date of publication of application: **24.06.2026**
(21) Application number: 25225203.6
(22) Date of filing: 18.12.2025
(51) Int. Cl.: G01N 35/04, B65G 29/00, B65G 47/52, B65G 47/53, B65G 47/80, B65G 47/84, G01N 35/00

(54) **TRANSPORT SYSTEM AND METHOD THEREFOR**

(30) Priority: 18.12.2024 EP 24221200
(71) Applicant: Beckman Coulter, Inc., Brea, CA 92821 (US)
(72) Inventor: KRAFCZYK, Thomas, Brea, 92821 (US); MUELLER, Martin, Brea, 92821 (US); ADOLF, Maximilian, Brea, 92821 (US)
(74) Representative: Paustian & Partner Patentanwälte mbB

(57) **Abstract**

A first aspect of the present disclosure is related to a transport system, comprising:
- a first linear transport element, configured to transport carriers along a linear path,
- a turntable, configured to transport carriers along a circular path,
wherein the turntable comprises a rotatable disc comprising a plurality of recesses, each configured to hold a single carrier,
wherein the first linear transport element and the turntable are positioned adjacent to each other to enable a transfer of a first carrier, the first carrier being transported on the first linear transport element, from the first linear transport element to a first recess of the rotatable disc,

- a guiding element, configured to constrain an angular displacement of the first carrier about a longitudinal axis of the first carrier when the first carrier is transferred from the first linear transport element into the first recess of the rotatable disc.

## Description

### Technical Field

This disclosure is related to transport systems and methods to control transport systems.

### Background

A transport system for a laboratory, e.g. for transporting tubes containing biological samples, can automate the movement of tubes between various workstations. Such a transport system may comprise multiple conveyors, turntables, robotic arms, and/or sensors. Tube carriers may be placed onto a conveyor that transports the carriers to designated locations, such as centrifuges, analyzers, or storage units. Such a system can enhance workflow efficiency, minimize human error, and speed up sample processing. Therefore, such transport systems are an important part of laboratories. Improvements are desirable.

### Summary

An object of the present disclosure is to improve the transport of carriers in a laboratory.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a transport system for transporting carriers, comprising:
- a first linear transport element, configured to transport carriers along a linear path,
- a turntable, configured to transport carriers along a circular path,
   wherein the turntable comprises a rotatable disc comprising a plurality of recesses, each configured to hold a single carrier, wherein the first linear transport element and the turntable are positioned adjacent to each other to enable a transfer of a first carrier, the first carrier being transported on the first linear transport element, from the first linear transport element to a first recess of the rotatable disc,
- a guiding element, configured to constrain an angular displacement of the first carrier about its longitudinal axis of the first carrier when the first carrier is transferred, e.g. from the first linear transport element, into the first recess of the rotatable disc.

A linear transport element, for example the first linear transport element, the second linear transport element, and/or any other linear transport elements, for transporting carriers can be implemented in various forms. A linear transport element may be configured to transport transportable elements, like carriers, such as the first carrier, the second carrier, or any other carrier, on a transport plane along a linear path, wherein a path comprising minor deviations or curvatures is still considered to be a linear path for the purpose of this disclosure. A linear transport element may comprise a conveyor belt, and may, optionally, comprise lateral guides. A linear transport element may comprise a transporting surface configured to support carriers which are adapted for carrying samples such as, for example, biological specimen. The transport of carriers along the linear transport element may be effected by frictional engagement between the transporting surface of a conveyor belt and a surface of the carriers, such that the movement of the conveyor belt surface imparts corresponding movement to the carriers. A linear transport element may also comprise a transporting surface which is adapted to allow for the movement of self-propelled carriers. The linear transport element may be adapted to facilitate the movement of carriers along the linear transport element in a sequential mode, i.e. one carrier after another.

A carrier may be configured to hold sample containers, such as sample tubes, each comprising e.g. a biological sample comprising for example blood, serum, urine or any other biological substance of diagnostic relevance. A carrier can also itself constitute a container for holding a biological sample. A carrier, or a sample container held by the carrier, may be open or closed with a cap/sealing and/or be configured to prevent contamination, spillage or damage of a sample contained therein. A carrier, or a sample container held by the carrier, may be adapted to allow for the secure transport of the respectively contained samples between different locations, e.g. locations within a diagnostic laboratory.

A carrier may comprise a base surface, which is adapted to come into frictional engagement with the transporting surface of a linear transport element and or the transporting surface of a turntable. The primary base surface of a carrier may be basically planar.

A carrier may comprise a comprise a body with a first component, wherein the first component comprises a substantially circular cross section taken perpendicular to the longitudinal axis of the carrier. In other words, a carrier my comprise a cylindrically shaped portion, wherein the central axis of the cylindrical portion and the longitudinal axis of the carrier may be coaxial. The longitudinal axis of the carrier can be defined as the central axis of the cylindrically shaped portion of the carrier, which extends through the geometric center of the circular cross-sections of the cylindrical portion of the carrier. The longitudinal axis of the carrier may be basically perpendicular to the base surface of the carrier. A carrier may be positioned within the transport system such, that the base surface of the carrier is parallel to the transporting surface of a linear transport element and/or to the transporting surface of a turntable.

While some components or segments of a carrier may be configured rotationally symmetrically, e.g. a cylindrical segment, others segments of the carrier may comprise cross sections, taken perpendicular to the longitudinal axis of the first carrier, with irregular shapes, comprising e.g. protrusions or indentations as described below.

The carrier may further comprise a support structure configured to receive an elongated sample container, such as a sample tube, in a substantially parallel orientation relative to the longitudinal axis of the carrier.

The transport system is adapted to transport carriers with samples and/or without samples.

A turntable can be configured to move carriers along a circular path, in particular to transfer carriers between two or more linear transportation elements. A turntable may comprise a rotatable disc, which is configured to facilitate the transport of carriers along a circular path between linear transportation elements. The rotatable disc comprises a plurality of recesses, each configured to receive and hold a carrier while the carrier is transported along the circular path. A rotatable disc may also be a ring, a wire construction with recesses, and/or any other element of a turntable by which recesses can be led along a circular path.

A turntable may comprise a planar transporting surface, configured to facilitate the movement of carriers along the circular path. The transporting surface may be smooth and carriers may slide upon the transporting surface of the turntable while being moved along the circular path by means of the rotatable disc. The transporting surface of the turntable may be arranged at the same height as the transporting surfaces of adjacent linear transport element(s) so that carriers can be smoothly transferred from a linear transport element to the turntable and from the turntable to a linear transport element.

A recess of the rotatable disc may be shaped in a complementary geometry in relation to a portion of a carrier. For example, if a carrier has a cylindrical portion, a recess with complementary geometry may comprise a concave shape adapted to receive the cylindrical portion of the carrier. To enable the receipt of a carrier into a recess of the rotatable disc, the position of the rotatable disc in relation to the transporting surface of the turntable may be selected such, that the cylindrical portion of the carrier can interact with the recess of the rotatable disc, when the carrier is comprised in the recess and/or is transported along the circular path by means of the rotation of the rotatable disc. Other suitable form-fit pairings between carrier shape and recess shape are suitable, such as polygons, ovals or spherical forms.

The rotatable disc may be driven by an electric motor, a geared motor, a rotary indexing drive or any other drive that causes the rotation of the rotatable disc about its central vertical axis.

A linear transport element with a conveyor belt may be positioned such in relation to a turntable that the conveyor belt of the transport element extends below the perimeter of the rotatable disc of the turntable such, that the linear transport element and the turntable spatially overlap at a carrier transfer zone. A carrier can be moved via the linear transport element to the transfer zone. At the transfer zone the carrier can be received by a recess of the rotatable disc of the turntable and then be moved via the movement of the rotatable disc of the turntable along the circular path.

A turntable may comprise smooth, easy-to-clean surfaces and may incorporate safety features such as covers or a variety of sensors which may detect the presence, absence or identity information related to carriers being transported at the turntable.

A turntable may be configured to move carriers along a circular path from one linear transport element to another linear transport element. The circular path can be a path extending from an entry point, where a carrier is received from a first linear transport element, to a release point, where the carrier is released to a second linear transport element. The circular path may be less than a full circle, for example 25% or 50% of a full circle. The circular path may be a path concentric with the circumference of the rotatable disc, positioned at a radial distance from the center of the rotatable disc, which may be equal, greater or smaller than the radius of the rotatable disc.

A circular path may be circular, or even oval and/or elliptical, if the rotatable disc of the turntable is configured accordingly. A circular path may be defined by the positions that a carrier may take, while being transported within a recess of the rotatable disc, when the rotatable disc is in rotational movement.

A guiding element can be an element which can constrain at least partly an angular displacement of a carrier about the longitudinal axis of the carrier, when the carrier is transferred from a linear transport element into a recess of the rotatable disc of the turntable. An unintended orientational change of a carrier about the longitudinal axis of the carrier may also be caused by a driving force along the linear path when the carrier interacts with the leading flank of a recess of the rotatable disc. In particular, the driving force may be applied by a conveyor of the linear transport element or by a motor of a self-propelled carrier. The leading flank of the recess may be shaped, in particular sloped such, that a carrier could, if moved by said driving force, travel along the slope of the leading flank and thereby causing a rotational change of the carrier orientation and a deviation from the linear path of the linear transport element. The guiding element of the present disclosure may prevent such a rotation by hindering the carrier from deviating from the linear path until the carrier is fully received within the recess of the rotatable disc of a turntable.

It can be beneficial to avoid or at least limit such an orientational change about the longitudinal axis of a carrier, e.g. if the transport system comprises sensors which can only or at least better detect, identify or otherwise analyze carriers, or indicia within or on the carriers or on containers transported within the carriers, if the carriers are positioned in a predefined orientation, and when the carriers are in vicinity to such sensors , like e.g. bar code readers or RFID readers. On the other hand, the transport system may comprise mechanical structures, electronic checkpoints or sample analysis devices that may be configured to only process carriers, or sample tubes comprised within carriers, if they are in a certain rotational orientation.

The guiding element is configured to restrain a carrier from substantially rotating around its longitudinal axis when the carrier is moving into the transition zone and is received in the recess of the rotatable disc. In particular, the guiding element is configured to restrain a carrier from substantially rotating around its longitudinal axis from the time when the carrier is entering the transition zone until the carrier is fully received by a recess of the rotatable disc, i.e. until the carrier cannot further advance into the recess of the linear transport element along the linear path of the linear transport element. The guiding element may restrain a carrier from rotating about its longitudinal axis in a direction that is opposite to the direction of rotation of the rotatable disc. For example, if the rotatable disc is rotating counterclockwise, the guiding element may restrain a carrier from rotating clockwise about its longitudinal axis.

A linear transport element may comprise at least one lateral boundary and the guiding element may be a pivotable element that, in one position, can extend the at least one lateral boundary of the linear transport element such that a carrier, when entering the transition zone along the linear path of the linear transport element, is restrained from rotating about its longitudinal axis, especially if the carrier is contacting the leading flank of a recess of the rotating disc when entering the transition zone.

An embodiment of the first aspect is related to a transport system,
wherein the turntable is configured to transport the first carrier along the circular path by means of a rotation of the rotatable disc around a rotational axis of the rotatable disc.

A rotatable disc of the turntable can comprise a wall comprising a plurality of recesses (or pockets), each defined by a respective wall segment, and a plurality of tooth segments, each defined by a wall segment which is connecting two adjacent recesses (herein referred to as an "inter-recess wall"). Each recess may be configured to hold a single carrier, but not more than one carrier. Each recess comprises a leading flank and a trailing flank, wherein the transport system is configured such that, when the rotatable disc is rotated, first the leading flank and then the trailing flank of a recess enters the transition zone.

A rotatable disc with a plurality of recesses for a plurality of carriers may be formed like a toothed wheel. Inter-recess walls may be formed as an arc segment of the circumference of the rotatable disc, wherein the length of an inter-recess wall may be smaller than the length of a wall segment defining a recess adjacent to the inter-recess wall. The length of an inter-recess wall may be less than 50%, less than 70% or less than 90% of the length of an adjacent wall segment defining a recess.

An inter-recess wall may comprise a continuous slope, thereby smoothly connecting two adjacent recesses. An inter-recess wall may also consist of an arc segment of the circumference of the rotatable disc with a different slope as compared to the slope of the leading flank of the one adjacent recess and the trailing flank of the other adjacent recess. The rotational disc can be configured such, that the length of an inter-recess wall is reduced and the length of the leading flank of an adjacent recesses is increased, wherein the wall of each recess is configured to hold exactly one carrier. Limiting the length of the inter-recess walls and increasing the length of the leading flank of a recess is advantageous, as carriers, when entering the transition zone, are less likely to contact an inter-recess wall and more likely to contact a leading flank of a recess. This way, when a carrier is entering the transition zone, the likelihood of an abrupt impact of the carrier with the rotatable disc is reduced and the likelihood of smoothly slowing down the speed of a carrier, when the carrier is in contact with an elongated leading flank of a recess, is increased. An abrupt impact of the carrier may lead to a potentially undesired percussion of a sample comprised within the carrier.

The rotational axis of the rotatable disc may be perpendicular to the transporting surface of the linear transport element and/or may be perpendicular to the transporting surface of the turntable.

An embodiment of the first aspect is related to a transport system,
wherein the turntable comprises a circular boundary surrounding the rotational axis of the turntable at least partially, and wherein the circular boundary comprises a first engagement region, which is configured to interact with the first carrier thereby causing an angular displacement of the first carrier about the longitudinal axis of the first carrier into a predetermined angular position when the first carrier is transferred from the linear path to the circular path by means of the rotation of the rotatable disc.

The circular boundary may be any element that supports the movement of a carrier along the circular path of the turntable. The circular boundary may surround the turntable, in particular the rotatable disc of the turntable, on the outer side, e.g. by being circular and having a diameter which is larger than the diameter of the rotatable disc. Alternatively, the circular boundary may be congruent with the outer circumference of the rotatable disc, e.g. congruent with the tips of the inter-recess walls of the rotatable disc. Alternatively, the circular boundary may have a diameter smaller than the diameter of the rotatable disc's perimeter. The circular boundary may be a rim or a lateral guide, which defines at least parts of the circular path of the turntable, and may be positioned along the outer border of the turntable. The circular boundary may comprise multiple circular segments, each defining a segment of a circle. For example, each segment of the turntable, where carriers are to be transferred between adjacent linear transport elements, may comprise a segment of the circular boundary. Segments of the turntable, where carriers are transferred from a linear transport element to the turntable or where carriers are transferred from the turntable to a linear transport element do not comprise a circular boundary.

The circular boundary can interact with a carrier, when the carrier is transported by the rotating means along the circular path, to make sure that the carrier remains on the circular path when the rotatable disc is rotating and is not, e.g. by a centrifugal force, removed from the circular path. Such interaction may occur between the circular boundary and part of the carrier body.

The circular boundary and/or the (arc) segments of the circular boundary may be coaxial with the rotational axis of the rotatable disc. The radius of the circular boundary and/or the (arc) segments of the circular boundary may be smaller, equal to or larger than the radius of the perimeter of the rotatable disc.

When a carrier is entering the turntable from a linear transport element, the body of the carrier may interact with a first engagement region of the circular boundary such, that a rotational movement of the carrier along the longitudinal axis of the carrier is induced. A first engagement region may be a corner point of the circular boundary with the first linear transport element. Additionally or alternatively, an engagement region may also be an element on or adjacent to the circular boundary that is configured to interact with an orientation member of a carrier at an infeed opening.

For example a carrier may be transported on a first linear transport element, wherein a first lateral surface of the carrier is facing into a linear movement direction on the linear path of the first linear transport device. When the carrier, transported on the first linear transport element, is entering a recess of the rotatable disc of the turntable and when the carrier is then moved by means of the rotatable disc along the circular path of the turntable, the body of the carrier may interact with the first engagement region of the circular boundary and may be thereby rotated such that the first lateral surface of the carrier is facing into a predetermined direction, in particular in the direction of the travel of the carrier on the circular path, i.e. into a tangential movement direction in relation to the circular path.

An embodiment of the first aspect is related to a transport system,
wherein the circular boundary is configured to interact with an orientation member of the first carrier thereby causing the angular displacement of the first carrier about the first carrier's longitudinal axis into the predetermined angular position when the first carrier is transferred from the linear path to the circular path by means of the rotation of the rotatable disc , and/or wherein the guiding element is configured to interact with an a second orientation member of the first carrier to constrain the angular displacement of the first carrier about the longitudinal axis when the first carrier is transferred into the first recess of the rotatable disc.

An orientation member of the first carrier may be an elongated and/or protruding element, such as a horn, a spike, a bulge, a rod, or the like, wherein the orientation member extends from the body of the first carrier.

An orientation member of the carrier may be configured to mechanically interact with the guiding element such that an angular displacement of the carrier about the longitudinal axis of the carrier is limited when the carrier is entering along the first linear path into the recess of the rotatable disc of the turntable.

An orientation member of a carrier may be configured to mechanically interact with the circular boundary, in particular with the first engagement region of the circular boundary, and thereby induce an angular displacement of the carrier about the longitudinal axis into the predetermined angular position, when the carrier is transferred from the linear path to the circular path, past the first engagement region and along the circular path of the turntable by means of the rotation of the rotatable disc.

A carrier may comprise one or multiple orientation members. If a carrier comprises multiple orientation members, one of the orientation members may be configured to mechanically interact with the guiding element in order limit an angular displacement of the carrier about the longitudinal axis when the carrier is entering into the recess of the rotatable disc of the turntable, and the other one of the orientation members may be configured to mechanically interact with the circular boundary, in particular with the first engagement region of the circular boundary, to induce an angular displacement of the carrier about the longitudinal axis into the predetermined angular position when the carrier is transferred from the linear path to the circular path, past the first engagement region and along the circular path of the turntable by means of the rotation of the rotatable disc.

An embodiment of the first aspect is related to a transport system,
wherein the first carrier comprises a body with a first component, wherein the first component comprises a substantially circular cross section taken perpendicular to the longitudinal axis of the first carrier, and wherein the body comprises the orientation member, wherein the orientation member comprises a protrusion extending from the body beyond the perimeter of the circular cross-section in a plane parallel to the circular cross-section.

The first component of the body of the first carrier may be a cylindrically shaped component, for example a segment of the carrier body along a defined length of the longitudinal axis of the carrier, which has an essentially circular circumference and wherein the central axis of the cylindrically shaped component is coaxial with or at least parallel to the longitudinal axis of the carrier. The first component may comprise, along a length of the first component's central axis, a substantially circular cross section taken perpendicular to the longitudinal axis of the first carrier. In other words the outer perimeter of the first component around the longitudinal axis of the first carrier may be circular. The dimensions of the circular outer perimeter of the first component may be selected such, that a recess of the rotatable disc, having an at least partially concave shape, can interact with the shape of the first component such, that the first carrier can be securely held by the recess of the rotatable disc, while the first carrier is moving along the circular path of the turntable.

The first component of the body of the first carrier may be further dimensioned to allow the first carrier to smoothly move along the circular path of the turntable while gliding along the circular boundary of the turntable. In other words, the dimensions of the circular boundary of the turntable, the dimensions of the first component and the dimensions of the recesses of the rotatable disc can be configured in relation to each other, that a carrier can be smoothly transported within a recess of the rotatable disc along the circular path of the turntable. In particular the body of the first component of the first carrier can be dimensioned such that it is, when the first carrier is being transported within a recess of a rotating turntable, not forced against the circular boundary of the turntable in a way that could substantially impede the movement of the turntable due to a frictional engagement of the carrier body with the circular boundary of the turntable.

A circular cross section may be essentially circular. That means that also an oval cross section may be regarded as a circular cross section of a carrier. The first component of the first carrier may be positioned in the lower half of the first carrier, e.g. directly adjacent to the base surface of the first carrier or within the lower quarter of the first carrier, wherein the lower half or the lower quarter of the first carrier shall mean the parts of the first carrier which are directly adjacent to the transporting surface of a linear transport element or a turntable, when the first carrier is transported on the respective transporting surfaces of the linear transport element or the turntable.

If the carrier is configured to transport sample containers and/or sample tubes, the carrier may comprise a first component with a circular cross section in at least some parts of the carrier which are configured to hold said container and/or sample tube.

An orientation member may be configured in various ways to ensure that the carrier can remain in the correct rotational orientation with regard to the longitudinal axis of the carrier. The orientation member may be implemented as a passive structural element that may interact mechanically with the surrounding environment, e.g. the guiding element and/or the circular boundary of the turntable. For example, the orientation member of the carrier may be configured a key, rib, boss, and/or protrusions, which may or may not interact with a respectively complementary geometrical structure of the transport system, e.g. the circular boundary of the turntable.

The orientation member may be configured as a protrusion of the first component of the body of the carrier, wherein the protrusion extends from the body beyond the perimeter of the circular cross-section in a plane parallel to the circular cross-section. The orientation member may extend radially from the rotational center of the first component, beyond the perimeter of the circular cross-section in a plane parallel to the circular cross-section. The orientation member may also extend in a direction tangential to the perimeter of the first component, beyond the perimeter of the circular cross-section in a plane parallel to the circular cross-section.

The orientation member may comprise any form that can interact with at least one boundary of a linear transport element or the circular boundary of the turntable such, that an essential change of the orientational direction of a carrier moving on the linear transport element or the turntable can be mechanically impeded via the interaction of the orientation member and the at least one boundary of a linear transport element or the circular boundary of the turntable

One or more geometric characteristics of an orientation member, e.g. a length of a protrusion beyond the perimeter of the circular cross-section in a plane parallel to the circular cross-section, may be related to the geometry of the turntable, e.g. a depth of a recess of the turntable or a position of a circular boundary.

For example the orientation member may be a protrusion having a predefined length, which is configured to prevent a rotational movement of the carrier while the carrier is being transported on a linear transport element.

The orientation member or one of the orientation members of a carrier may be configured to interact with the guiding element, when the carrier is moving from a linear transport element into the transition zone and enters a recess of the rotatable disc, wherein such interaction may cause the carrier to essentially retain its rotational orientation.

The orientation member, or one of the orientation members, of a carrier may be configured to interact with the circular boundary, in particular with the engagement region of the circular boundary, when the carrier is being moved from the transition zone along the circular path by means of a rotation of the rotatable disc of the turntable, wherein such interaction may cause an angular displacement of the first carrier about the longitudinal axis into a predetermined angular position. When the orientation member interacts with the circular boundary, in particular with the engagement region of the circular boundary, the carrier may revolve around its longitudinal axis or around an axis parallel to the longitudinal axis of the carrier such that the first carrier is turned about the longitudinal axis into a predetermined angular position.

The orientation member(s) of a carrier may be positioned at the carrier body in a position where they do not mechanically interact with the rotatable disc. For example the orientation member(s) of a carrier may be positioned at a defined height of the carrier body, where they may be positioned within a space between the transport surface of the turntable and the rotatable disc of the turntable, or where they may be positioned above the rotatable disc of the turntable.

An embodiment of the first aspect is related to a transport system,
wherein the first recess of the rotatable disc is defined by a leading flank and a trailing flank, the leading flank being less steep than the trailing flank.

The leading flank may be defined by a first wall segment of the rotatable disc which extends from a recess start position to a recess middle position wherein the trailing flank is defined by a second wall segment of the rotatable disc which extends from the recess middle position to a recess end position, wherein both the recess start position and the recess end position are located at the periphery of the rotatable disc, wherein the recess middle position is located at the position of the first recess which has the shortest radial distance to the rotational axis of the rotatable disc, wherein both the leading flank and the trailing flank comprise a continuous slope and wherein the leading flank is longer than the trailing flank.

The leading flank may, in a first section adjacent to the starting position, be configured as a linear slope while it may, in a second section adjacent to the middle position, be configured as a curve, wherein the curvature of the second section corresponds to the curvature of the trailing flank such, that a carrier comprising a component with a complementary curvature, e.g. a circular shape, may interact with the wall of the recess such, that the carrier can be received by the recess in a form-fit fashion.

In other words, the rotatable disc may have a sawblade-like form and the teeth of the sawblade may be directed to the turning direction of the rotatable disc when moving carriers.

The transport system may be configured such that carriers entering the transition zone from a linear transport element are first contacting the leading flank of a recess, which may result in a reduction of the travel speed of the arriving carrier while entering the recess and which may further result in a reduced impact of the carrier when it is fully received inside the respective recess.

An embodiment of the first aspect is related to a transport system,
wherein the first linear transport element comprises a linear transporting surface and the turntable comprises a circular transporting surface, wherein the linear transporting surface and the circular transporting surface are arranged on a first plane;
wherein the rotatable disc is arranged on a second plane,
wherein the first plane and the second plane are parallel with one another and distanced from one another, such that, in operation, when the first carrier is transported on the circular transporting surface, the body of the carriers, in particular the first component of the body, interacts with a recess of the rotatable disc such that the carrier is moved along the circular path by means of the rotational movement of the rotatable disc; and
wherein, in operation, the guiding element is arranged between the first plane and the second plane or above the second plane.

Within the transport system carriers may be transported on and may smoothly transition between a linear transporting surface and a circular transporting surface or vice versa. The linear transporting surface may e.g. be defined by the surface of a conveyor chain or belt and the circular transporting surface may e.g. be defined by a smooth surface on top of which carriers can slide while being transported within a recess of the rotatable disc of a turntable. The transport system may comprise a linear transport element that comprises a conveyor belt, wherein the conveyor belt extends into the perimeter of an adjacent turntable, wherein the surface of the conveyor belt and the surface of the circular transporting surface of the turntable are on a first plane. The conveyor belt may extend such into the perimeter of an adjacent turntable that a carrier being transported on the linear transport element into the transition zone can be propelled by the movement of the conveyor belt of the linear transport element until the carrier is fully received by the recess of the rotatable disc of the turntable.

Likewise, a conveyor belt of a second linear transport element, moving carriers away from the turntable, may extend such into the perimeter of the turntable that a carrier held in a recess of the rotatable disc may, when said recess passes the location where the conveyor belt of the second linear transport element extends into the perimeter of the turntable, be picked up by said conveyor belt and be transported away from the turntable on said second linear transport element.

The second plane may be parallel to and above the first plane, i.e. the second plane may be located perpendicularly spaced apart from the first plane in the direction where carriers are positioned on the circular transporting surface. If the turntable is in operation, the body of a first carriers, in particular the first component of the body of the carrier, may interact at the second plane with a recess of the rotatable disc such that the carrier is received by the recess and can be moved along the circular path by means of the rotational movement of the rotatable disc. The carrier, in particular the first component of the carrier, may have a circular shape at the second plane, wherein the recess(es) of the rotatable disc comprises a compatible at least partially concave shape that is configured to receive the carrier such that an angular displacement of the first carrier about the longitudinal axis of the first carrier is enabled. For example the carrier may be turned around its longitudinal axis into a predetermined position by means of a rotation of the carrier within the recess, i.e. sliding along the wall of the recess. Such a rotation may be induced by an interaction of an orientation member of the carrier with a circular boundary of the turntable while the carrier being transported along the circular path of the turntable by means of the rotatable disc of the turntable.

An embodiment of the first aspect is related to a transport system,
wherein the guiding element comprises a lever , adapted to pivot between a first position , in which the lever is oriented essentially parallel to the first linear transport element, and a second position , in which the lever is oriented essentially tangential to the circular boundary of the turntable.

The guiding element may comprise or may be a lever. The lever may be passive, i.e. not driven by a motor. It may be pivotable around a rotation axis between a first position and a second position. A mechanical stop may be used to ensure that the lever, when pivoting from the second position to the first position, cannot pivot further than to the first position. A second mechanical stop may be used to ensure that the lever, when pivoting from the first position to the second position, cannot pivot further than to the second position.

The lever may be positioned in close vicinity to both a linear transport element and a turntable and may comprise a straight shape, like a rod or a bar. The lever may further comprise a first lateral contact surface which may come into contact with a carrier when the carrier moves from the linear transport element to the turntable. The lever may further comprise a second lateral contact surface which may come into contact with a carrier when the carrier moves along the circular path of the turntable and passes by the transition zone.

If the lever is in the first position, a carrier, when being transported along the circular path of the turntable within a recess of the rotatable disc at the transition zone, may contact the lever, in particular the second lateral contact surface of the lever, and push the lever into the second position.

If the lever is in the second position, a carrier, when being transported along the linear path of the linear transport element into the transition zone, may contact the lever, in particular the first lateral contact surface of the lever, and push the lever into the first position.

If the lever is in the first position, a carrier, when being transported along the linear path of the linear transport element into the transition zone, may slide along the lever, in particular the first lateral contact surface of the lever, such, that the carrier continues to move in the direction of the linear path of the linear transport element until the carrier is fully received by the recess of the rotatable disc. The lever is configured to guide the carrier during its movement within the transition zone, in particular to ensure that the carrier continues to move along the linear path and does not move into the direction from which the recess(es) of the turntable are moved into the transition zone by means of the rotation of the rotatable disc.

The lever, in particular the first lateral contact surface of the lever and the second lateral contact surface of the lever, may interact with the body of the carrier at a suitable location, for example above or below the second plane, i.e. above or below the level where the recess of the rotatable disc interacts with the carrier.

The lever may, in the first position, be configured to essentially extend a boundary of the linear transport element to facilitate the transfer of a carrier along the first linear transport element into a recess of a rotatable disc of the turntable at the transition zone, thereby ensuring that the linear movement of the carrier is retained and that the carrier cannot move into the direction from which the recess(es) of the turntable are moved into the transition zone by means of the rotation of the rotatable disc.

An embodiment of the first aspect is related to a transport system,
wherein, in the first position , the guiding element is adapted to interact with the body and/or the orientation member of the first carrier to constrain the angular displacement of the first carrier about the longitudinal axis when the first carrier is transferred into the first recess of the rotatable disc, and wherein, in the second position , the guiding element enables unimpeded the passage of carriers along the circular path.

In the first position, the lever of the guiding element may impede a rotational movement of a carrier, being transferred from the linear transport element, along the longitudinal axis of the carrier, when said carrier is entering the transition zone, i.e. the area where the linear transport element and the turntable spatially overlap, in particular to impede said rotational movement of a carrier in spite of rotational forces that may be exerted on the carrier by the linear transport element and by the rotatable disc within the transition zone.

In the second position, the lever of the guiding element is positioned such that carriers which are transported within a recess of the rotatable disc along the circular path through the transition zone are not hindered by the lever from passing thought the transition zone.

The lever of the guiding element may be freely pivotable between the first position and the second position such, that the body of carriers transported along the circular path by the turntable may interact with the lever, if the lever is in the first position, and thereby smoothly move the lever from the first position to the second position, and that the body of carriers transported along the linear path of a linear transport element, when passing thought the transition zone, may interact with the lever, if the lever is in the second position, and thereby smoothly move the lever from the second position to the first position.

An embodiment of the first aspect is related to a transport system,
wherein the first linear transport element and the turntable spatially overlap at a first transition zone , and wherein at the first transition zone the first carrier is transferable from the linear path of the first linear transport element to the circular path of the turntable, and a second carrier is movable within a second recess of the rotatable disc through the first transition zone along the circular path of the turntable.

The first transition zone defines a region of the transport system, where a linear transport element for transporting carriers into the direction of the turntable overlaps spatially with a turntable, wherein the transport system is configures to either facilitate the transport of a first carrier which is transported along the linear path of the linear transport element, into an empty recess of the turntable at the transition zone, or to transport of second carrier, which is already comprised in a recess of the rotatable disc of a turntable prior to entering the transition zone, along the circular path of the turntable through the first transition zone.

An embodiment of the first aspect is related to a transport system,
wherein, if the guiding element is in the first position , the guiding element is moved from the first position into the second position , when the second carrier enters the first transition zone , and
if the guiding element is in the second position, the guiding element is moved from the second position to the first position, when the first carrier enters the first transition zone.

In other words, the guiding element is pushed from a first position to a second position by a second carrier that is already transported along the circular path of the turntable. The guiding element is configured to provide no substantial barrier to the passage of the second carrier during the second carrier's transport through the first transition zone by the turntable. When the guiding element is in the second position, an first carrier, arriving via the linear transport element, may push the guiding element into the first position. The guiding element is configured to provide no substantial barrier to the passage of the first carrier during the first carrier's transport through the first transition zone. Only when the first position is reached, the guiding element will act as a barrier for the incoming first carrier. The guiding element may therefore be configured as freely movable between the first and the second position.

In the first position, the guiding element, may act as a guard rail that essentially extends a guardrail of the first linear transport element, such that a first carrier moving along the first linear path may continue to move along the first linear path, even when entering the transition zone and when entering the recess of the rotatable disc. Additionally or alternatively, in the second position the guiding element may be essentially tangential to the perimeter of the rotatable disc.

An embodiment of the first aspect is related to a transport system,
further comprising a gate mechanism configured to control the movement of the first carrier, the first carrier being transported on the first linear transport element to the turntable,
wherein the gate mechanism enables unimpeded passage of the first carrier along the first transport element towards the first transition zone, if the first recess is unoccupied by another carrier and if the first recess is positioned such that a time required to move the first recess into the transition zone by means of the rotation of the rotatable disc is equal to a time required to move the first carrier from the gate mechanism to the transition zone,
and wherein the gate mechanism further prevents the first carrier from moving past the gate mechanism towards the turntable if the first recess is already occupied by another carrier.

A gate mechanism may be configured, for example, by an active or passive entry element, wherein the mechanism is configured to allow access of a fist carrier, being transported on the first linear transport element, into the transition zone when an empty recess of the rotatable disc of the turntable is being moved towards the transition zone with the appropriate velocity, that the first carrier will be able to enter said free recess when the first carrier arrives at the turntable. The gate mechanism is configured to block the entry of the first carrier into the transition zone if an occupied recess of the rotatable disc is approaching the transition zone via the rotation of the rotatable disc, thereby preventing at the transition zone a collision of the first carrier with a second carrier, which is occupying the second recess. The detection of an occupied and/or free recess can be done via a mechanically passive mechanism or via a sensor. If a sensor is used, the sensor information may be used to control the gate mechanism.

The gate mechanism may be configured to control the movement of a first carrier, the first carrier being transported on the first linear transport element into the direction of the turntable, wherein the gate mechanism may be configured to release a blocking mechanism in order to allow a first carrier to pass along the first transport element towards the first transition zone, if the first recess of the rotatable disc is unoccupied by another carrier and if the first recess is positioned such that the rotatable disc will move the first recess into the transition zone at the same time when the first carrier, after having been released by the blocking mechanism, arrives at the position of the transition zone, where the first carrier may enter the unoccupied first recess.

The gate mechanism may be further configured to prevent the release of the blocking mechanism in order to avoid that the first carrier would collide with an already taken recess position at the transition zone and/or to avoid that the first carrier would arrive at a timepoint at the turntable, where an empty recess would not be in an appropriate position to smoothly allow for the entrance of the first carrier into the first recess position.

A recess located before the transition zone may be positioned such that a time required to move the recess into the transition zone is equal to a time required to move the first carrier from the gate mechanism to the transition zone. This time may not be an exact time but rather a time range which is suitable for transferring carriers from the linear to the circular path. The shape of the leading flank and the shape of the trailing flank of a recess of the rotatable disc, the rotation velocity of the rotatable disc and/or the transport velocity of the linear transport element can be configured to modulate how much time a carrier may have for being transported from the first linear transport element, in particular from the gate mechanism, into a recess of the turning turntable.

An embodiment of the first aspect is related to a transport system,
wherein the first linear transport element comprises a conveyor for conveying the first carrier along the linear path towards the turntable, and wherein the speed of the conveyor, the speed of the rotation of the rotatable disc and the position of the gate mechanism are selected such that, the first carrier, when the gate mechanism enables unimpeded passage of the first carrier to move towards the first transition zone, is, when entering the first recess, first contacting the leading flank of the first recess.

The speed of a first carrier, which is moved along on a conveyor or self-propelled on the first linear transport element, may be adjusted to the speed of the rotatable disc of the turntable such, that the first carrier will, once a blocking of the movement of the first carrier along the linear path of the first linear transport element has been removed by the gate mechanism, move towards the area where the linear transport element and the turntable spatially overlap, and will contact the leading flank of an approaching empty recess of the rotatable disc. The dimensions of the turntable, the linear transport element and the gating mechanism may be adapted to each other such, that the first carrier can arrive at the next available empty recess of the rotatable disc at the appropriate time to enable the carrier to make contact with the leading flank of the turntable and then retain contact with the leading flank of the turntable until the first carrier is fully received by the recess.

The gating mechanism may comprise a first component which may be configured to interact with the inter-recess walls of the rotatable disc and/or with carriers, which are transported in occupied recesses of the rotatable disc, in order to identify whether an empty recess is approaching the transition zone and/or whether the empty recess will arrive at the transition zone at the right time, so that a carrier arriving from the linear transport element can enter the recess at an appropriate time, in particular at a time that will enable the carrier to first contact the leading flank of the recess when entering the recess.

The gating mechanism may comprise a second component which may be configured to interact with the first component and with the carriers approaching the gating mechanism along the linear transport element. If the first component of the gating mechanism has determined that an empty recess is approaching the transition zone, the first component may be configured to trigger the second component to allow a carrier on the first linear transport element to pass the gating mechanism at the appropriate time that, when the carrier has arrived at the roundtable, it will be in an appropriate position to enter the empty recess of the rotatable disc.

In case, the carriers are self-propelled (in particular when the first linear transport element does not comprise an active conveyor), the velocity of the carriers may be controlled in relation to the velocity of the rotatable disc of the turntable. In particular, carriers on a first transport element can be controlled such that they approach the turntable slower in the transition zone, in particular after having passed a gate mechanism.

An embodiment of the first aspect is related to a transport system,
further comprising a second linear transport element, configured to transport carriers along a second linear path,
wherein the turntable and the second linear transport element spatially overlap at a second transition zone, and wherein at the second transition zone the first carrier is transferable from the circular path to the second linear path of the second linear transport element.

The second linear transport element may comprise a conveyor belt which extends below the rotatable disc of the turntable at the second transition zone. When a carrier approaches the second transition zone along the circular path of the turntable, it may slide from the circular path of the turntable over to the second linear path of the second linear transport element.

The conveyor may then transport the carrier out of the recess of the turntable along the second linear path of the second linear transport element.

The second transition zone may comprise a gate, for example configures as a pivotable bar, that can be opened and closed and thereby allow carries to leave the circular path, if the gate is open, or force carriers to remain on the circular path, if the gate is closed.

The turntable may comprise a sensor that can detect whether a carrier, being moved along the circular path of the turntable, is approaching the second transition zone.

The sensor may be configured to identify a carrier which is approaching in a recess of the rotatable disc on the turntable and, in response to the identified carrier, to cause the gate to be opened or closed. Thereby this sensor and gate mechanism may be configured to control the flow of carriers within the transport system.

An embodiment of the first aspect is related to a transport system,
wherein the circular boundary comprises a second engagement region, which is configured to interact with the first carrier or the second carrier, thereby causing an angular displacement of the first carrier and/or the second carrier about the longitudinal axis into a predetermined angular position when the first carrier or the second carrier is transferred from the circular path to the second linear path by means of the second linear transport element.

When the first carrier and/or the second carrier is transferred from the circular path to the second linear path the body of the first carrier and/or the second carrier, in particular an orientation member of the first carrier and/or the second carrier, may interact with the circular boundary of the turntable, in particular a second engagement region of the circular boundary to cause an angular displacement of the first carrier and/or the second carrier about the longitudinal axis into a predetermined angular position. A second engagement region may be configured in the same way or analog to the engagement region for incoming carriers as described above.

A second aspect of the present disclosure is related to a method for controlling the orientation of carriers transported on a transport system according to any one of the preceding claims.

The method may comprise transferring carriers from a first linear transport element, defining a first linear path, to a turntable, comprising a rotatable disc with recesses, each configured to receive a single carrier, the turntable defining a circular path, wherein, during the transfer of a carrier from the linear transport element to a recess of the rotatable disc, the rotational orientation of the carriers is controlled such, that the same lateral surface of the carrier body faces into the direction of movement, both while the carrier is transported along the first linear path and while the carrier is transported along the circular path. In other words, a front of the carrier, which may be defined as the surface of the carrier which is essentially facing into the direction of travel on the first linear transport element, is rotated about the longitudinal axis of the carrier such at the transfer zone, where the carrier is transferred from the linear transport element to the turntable, that the front of the carrier also faces into the direction of travel, i.e. in a tangential direction with regard to the circular path, when being moved along the circular path.

The method may further comprise a step of transferring, at a second transfer zone, carriers from the turntable to a second linear transport element, defining a second linear path, wherein during that transfer the rotational orientation of the carriers is controlled such that after the transfer the front of the carrier faces into the direction of travel of the second linear transport element.

The method for controlling the orientation of carriers when transferring carriers from the first linear transport element to the rotatable disc, may comprise the use of a guiding element to prevent a carrier from deviating from the linear transport path while entering a recess of the circular transport element.

An unintended orientational change of a carrier about the longitudinal axis of the carrier may be caused by a driving force along the linear path when the carrier interacts with a leading flank of a recess of the rotatable disc. In particular, the driving force may be applied by a conveyor of the linear transport element or by a motor of a self-propelled carrier. The leading flank of the recess may be shaped, in particular sloped such, that a carrier could, if moved by said driving force, travel along the slope of the leading flank and thereby causing a rotational change of the carrier orientation and a deviation from the linear path of the linear transport element. The guiding element of the present disclosure may prevent such a rotation by hindering the carrier from deviating from the linear path until the carrier is fully received within the recess of the rotatable disc of a turntable.

Therefore, controlling the orientation of carriers may also include the controlling of a transport speed of the rotatable disc of the turntable and controlling a transport speed of the linear transport element, e.g. a speed of a conveyor. The two speeds can be controlled such that a movement of recesses of the rotatable disc is adjusted to a movement of carriers approaching the turntable on the linear transport element, such that each carrier is correctly received within a respective recess of the rotatable disc and, while being guided by the guiding element, can smoothly proceed into the recess without experiencing a rotational displacement around it's longitudinal axis..

In particular the transport speed of carriers on the first linear transport element may be controlled equal or slower than the tangential velocity of the rotatable disc of the turntable, e.g. 5%, 10%, 15%, or 20% slower. This may facilitate a stable infeed of carriers, as described above.

Additionally or alternatively, a method for controlling the orientation of carriers on a transport system when entering a rotatable disc of a turntable may comprise the use of a guiding element which is interacting with the body of the transported carriers such, that a carrier, when entering the turntable from a linear transport element, can push the guiding element into a position, where the guiding element can prevent the carrier from turning in a non-desired orientation while entering the recess.

As mentioned above, the method may comprise the controlling of a rotational displacement of a carrier when leaving the turntable and transferring over to a second linear transport element. Herein, the transport speed of the second linear transport element may be controlled together with the speed of the rotatable disc analog or similar to the transport speeds used for transferring carriers from the first transport element to the roundtable.

A further aspect of the present disclosure is related to a computing device comprising a processor configured to carry out the method according to any one of preceding aspects/embodiments.

A further process of the present disclosure is related to a computer program product comprising instructions which, when the program is executed by a computer system, cause the computer system to carry out the method according to any one of the preceding aspects/embodiments.

A further aspect of the present disclosure is related to a computer-readable medium comprising instructions which, when executed by a computer system, cause the computer system to carry out the method according to any one of the preceding aspects/embodiments.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1b - Fig. 1e illustrate a transport system for infeed and outfeed orientation control according to embodiments of this disclosure.
Fig. 2a and Fig. 2b illustrate a guiding element according to embodiments of this disclosure.
Fig. 3a and Fig. 3b illustrate a guiding element and a gate mechanism according to embodiments of this disclosure.
Fig. 4 illustrates a system with a transport system according to or for embodiments of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure and which illustrate specific aspects in which the present disclosure can be understood. Identical reference signs refer to identical or at least functionally or structurally similar features.

### Detailed description

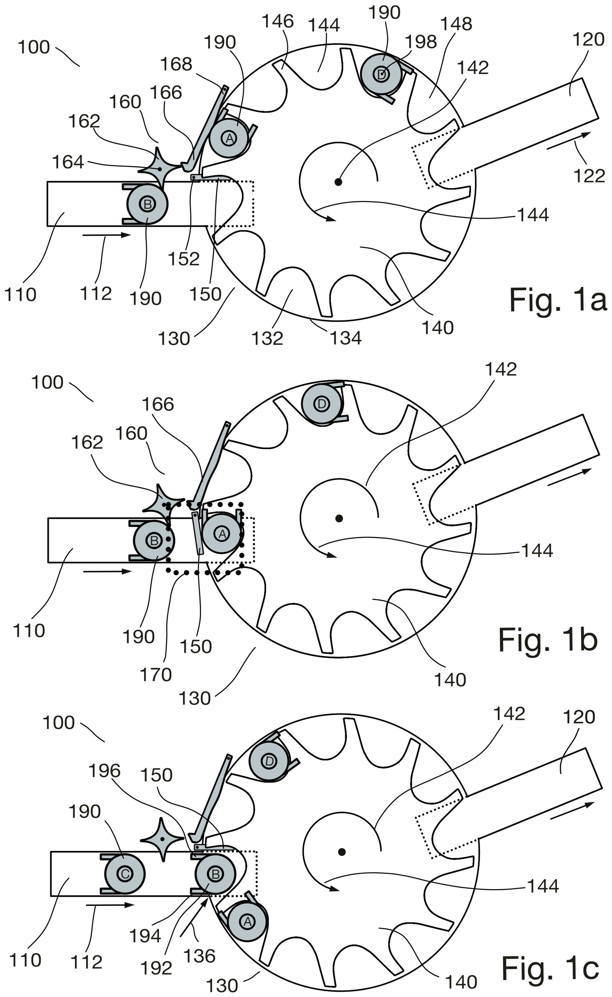

Fig. 1a - 1e illustrate a simplified example of a transport system 100 with a turntable 130 for moving samples or carriers A, B, C, D between two linear transport elements 110, 120. The carriers are guided into the turntable by a guiding element 150 such that they maintain a pre-defined orientation or at least do not turn in to an undesired orientation along their longitudinal axis 198. Furthermore, the transport system comprises a gate mechanism 160, which prevents congestion in a transition zone of the transport system.

Fig. 1a illustrates the different elements of the transport system 100. A first transport element 110 and a second transport element 120 may each comprise an actively propelled conveyor, comprising e.g. a conveyor belt or a conveyor chain. Carriers 190 transported on the first linear transport element may be scheduled in the transport system 100 to be transferred to the second linear transport element 120. Therefore, a turntable 130 is used. Linear transport elements providing carriers to the turntable or detracting carriers from the turntable may be attached at different positions to the turntable. A first linear transport element, configured to transport carriers along a first linear path towards the turntable, may be positioned in a predetermined angle in relation to a second linear transport element, configured to transport carriers along a second linear path away from the turntable. The predetermined angle corresponds to the angle between a straight defined by the first linear path and a straight defined by the second linear path. The predetermined angle may be any angle that is advantageous for the transport system 100, e.g. 10°, 20°, 30°, 40°, 45°, 50°, 60°, 70°, 80°, 90°, 100°, 110°, 120°, 130°, 135°, 140°, 150°, 160°, 170°, 180°, 190°, 200°, 210°, 220°, 225°, 230°, 240°, 250°, 260°, 270°, 280°, 290°, 300°, 310°, 315°, 320°, 330°, 340°, 350° or any other angle, in particular between 5° and 355°. An advantageous angle may for example be adopted to a spatial requirement of the laboratory space available for building and operating the transport system. The turntable 130 comprises a base plate 132, which is arranged essentially on the same plane as the transporting surface of the first and the second linear transport elements, in particular on the same plane as the transporting surface of a conveyor belt comprised by the first and/or the second linear transport elements. The dotted lines shall indicate that the linear transport element 110, especially a conveyor element comprised by the linear transport element 110, may extend into and spatially overlap with the area of the roundtable. For example carriers may be transported towards the turntable by means of a linear transport element which spatially overlaps with the roundtable at the end of the first linear transport element, in particular at a first transition zone between the first linear transport element and the turntable. Thereby, carriers can be transferred essentially on the same plane from the first linear transport element 110 to the turntable 130 and, at an analogous second transition zone, where the turntable and the start of a second linear transport element spatially overlap, from the turntable to the second linear transport element. Additionally, the turntable 130 comprises a circular boundary 134, which is arranged at least partly at the outer circumference of the base plate of the turntable. The circular boundary needs to be at least interrupted at the locations where the first and the second transportation elements 110, 120 are overlapping with the turntable 130, i.e. at the first transition zone 170 and at the second transition zone 172, in order to receive and/or release carriers.

Furthermore, a turntable comprises a rotatable disc 140, which can rotate around its rotational axis 142, clockwise or counter-clock-wise, subject to the transportation requirements of the transport system. In Fig. 1a the rotatable disc 140 is turning in the direction 144. The rotatable disc may have the form of a tooth-wheel with recesses 148 in between the teeth 146. The teeth 146 are tapered to the outside, i.e. the wall of the recess may be elongated at the leading flank of the recess, such that the length if region between two recesses, i.e. a tooth of the rotatable disc, is reduced, such that, even if the arrival time of carriers at the turntable is not controlled, the likelihood of a carrier contacting a tooth of the rotatable disc, when moving into the first transition zone, is reduced. In other words, the teeth may be inclined towards the common rotation direction 144 of the rotatable disc. This facilitates entry of carriers into recesses. In particular, the leading edge of a recess is more inclined to the common rotation direction 144 than the trailing edge of the same recess.

Next to the turntable and the first transport element, in particular at the first transition zone, a guiding element is arranged, which may comprise a lever 150 which is rotatable around its mounting axis 152 and which is configured to be movable between a first position and a second position.

The transport system is further equipped with a gate mechanism 160. The gate mechanism is configured to control access of new carriers into a first transition zone 170 (only indicated in Fig. 1b), which is a zone where the first linear transport element and the turntable meet (or spatially overlap) and where a carrier 190 can be handed over from the first linear transport element 110 to the turntable 130. The gate mechanism comprises a separation wheel 162. The separation wheel 162 is formed as a four-pointed star wheel and configured to turn about its rotational axis 164. Additionally, the gate mechanism 160 comprises a control lever 166, which is configured to block or release the separation wheel 162 from turning and thereby allowing a new carrier entering the first transition zone 170. The state of the control lever depends on the state of the next recess that could be used for a carrier approaching on the first linear transport element. In case the next recess is free, the control lever 166 allows rotation of the separation wheel 162 and a new carrier can enter the first transition zone 170. In case the recess is occupied by a carrier 190, the control lever 166 blocks the separation wheel 162 from turning. Then, no new carrier 190 can enter the first transition zone 170. In order to block or release the separation wheel 162, the control lever 166 is configured to turn, in particular by a small angle, around its mounting axis 168.

Carriers 190 that can be transported by the transport system 100 may comprise body with at least a first component comprising a substantially circular cross section taken perpendicular to the longitudinal axis of the first carrier, which is depicted in Fig 1c as circular carrier 190 bodies 192. Carriers may further comprise orientation members 194, 196.

The transport system 100 is configured to function as follows in order to transfer new carriers from the first transport element to the turntable.

Fig. 1a shows the transport system 100 in a first state, in which two carriers 190, carriers A and D, are transported by the turntable 130. A third carrier 190, carrier B, approaches the turntable 130 on the first linear transport element 110, i.e. the carrier B moves in the direction indicated by the arrow 112 towards the turntable 130. The rotatable disc 140 of the turntable 130 is turning with a pre-defined velocity. A next potential recess of the turntable 130 for carrier B is occupied by carrier A, which is therefore in an activation zone for the gate mechanism 160. In the activation zone, the carrier A pushes outwards the control lever 166, which then turns around its axis 168 into a first position. In this position, the control lever 166 blocks the separation wheel 162 from turning around its rotational axis 164. Thereby, the separation wheel 162 blocks carrier B from entering the first transition zone 170 (the latter is only indicated in Fig. 1b).

Fig. 1b shows the transport system 100 in a second state occurring shortly after the first state shown in Fig. 1a. The rotatable disc 140 of the turntable 130 revolved further around its rotational axis 142, thereby moving the carriers A and D further in anti-clockwise direction 144. The carrier A is passing the first transition zone 170 in which the turntable can receive new carriers 190 from the first linear transport element 110. Thereby, carrier A pushes away the lever of the guiding element 150, which thereby changes its position from its first position to its second position, the latter being essentially tangential to the circumference of the turntable 130. Since the lever of the guiding element 150 is freely movable between its two positions, the lever does not impede the movement of the carrier A. In other words, when the carrier body interacts with the lever of the guiding element and moves the lever into the second position, the transport velocity of the turntable is not substantially changed.

By entering the first transition zone 170, the carrier A has left the activation zone for the gate mechanism 160. When carrier A has left the activation zone for the gate mechanism, the control lever 166 may be pushed against the following tooth of the rotatable disc, which is separating the recess of carrier A and the next recess, if a carrier (here carrier B) is waiting at the separation wheel to be allowed to enter the first transition zone. If carrier B is pushed against the separation wheel, especially by means of a conveyor of the first linear transport element or my means of a motor of a self-propelled carrier, the separation wheel 162 will push against the lever of the guiding element 150, which thereby will be pushed against said following tooth of the rotatable disc. When the rotatable disc turns further the control lever loses contact with said following tooth of the rotatable disc at a certain time point. At this time the force applied by carrier B to the separation wheel 162 will enable the tip of the control lever 166 to further pivot away from the axis 164 of the separation wheel 162, thereby no longer blocking the rotation of the separation wheel. Hence, the separation wheel 162 is now free to move, in particular in a counter-clock-wise direction, and is no longer blocked by the separation mechanism 160 as it was in the first state (Fig. 1a). Carrier B can now enter the transition zone 170.

Fig. 1c shows the transport system 100 in a third state occurring shortly after the second state shown in Fig. 1b. The rotatable disc 140 of the turntable 130 revolved further around its rotational axis 142, thereby moving the carriers A and D further in anti-clockwise direction 144. The carrier B enters the turntable 130, thereby pushing the lever of the guiding element 150 of the guiding element inwards to the turntable into its first position. In the first position, the lever of the guiding element 150 is essentially parallel to the transport direction 112 of the first linear transport element 110, i.e. the lever may prolong a lateral boundary of the first transport element 110 such that a carrier cannot deviate from the first linear path of the first linear transport element within the first transition zone, in particular while entering into a free recess of the rotatable disc 140 of the turntable 130. In particular the lever in the first position restrains a carrier passing thought the first transition zone from moving into a recess of the rotatable disc in a direction that is at least partially opposite to the turning direction of the rotatable disc. In other implementations, the lever does not need to be essentially parallel, but may form, e.g., an acute angle with the first transport direction. This depends on the implementation of the transport arrangement. By being guided by the lever the carrier B is prevented from experiencing forces that would turn it (i.e. displace it about a longitudinal axis 198) in an undesired orientation. In the transport system shown in the Fig. 1c, which is only an example, such forces may be caused by the following problem. Without the guiding element 150, the carrier B, when moving through the transition zone 170 into a recess, may deviate from the conveyor of the first transport element 110 and move partly onto a non-actuated zone of the turntable (e.g. a zone below the lever 150 of Fig. 1c). This causes friction on the part of carrier B on the non-actuated zone, while the other part of carrier B, which is still on the conveyor, would still be moved. This difference in forces causes an undesired rotation of carrier B in a direction that is opposite to the direction of rotation 144 of the rotatable disc 140. This undesired rotation is prevented by the guiding element 150.

Furthermore, a new carrier 190, carrier C, approaches the turntable 130 from the linear transport element 110.

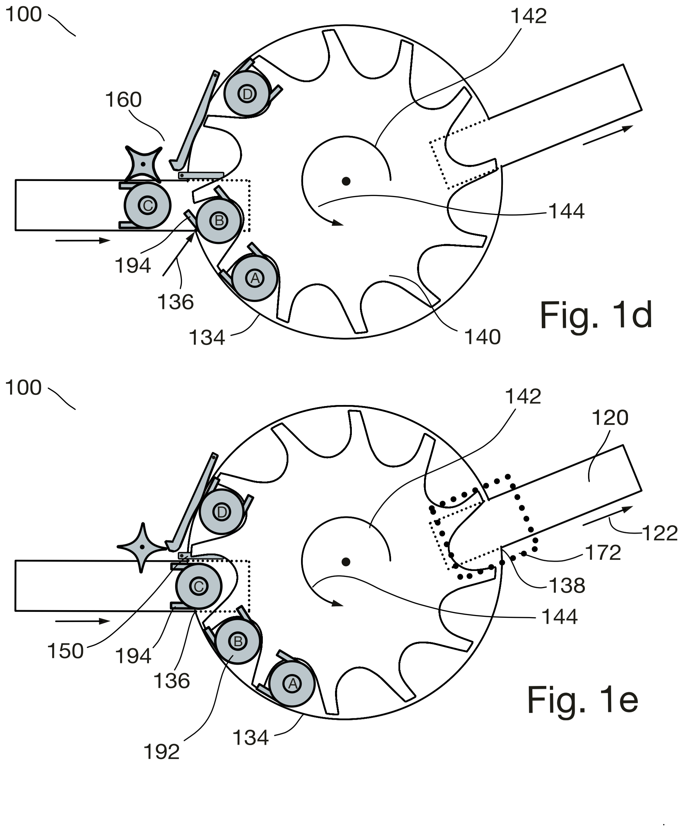

Fig. 1d shows the transport system 100 in a fourth state occurring shortly after the third state shown in Fig. 1c.

The circular boundary comprises a first engagement region 136, which is configured to interact with a carrier 190, in particular with an orientation member 194, e.g. of carrier B, thereby causing an angular displacement of the carrier B about the longitudinal axis into a predetermined angular position when the carrier B is transferred from the linear path 112 of the first linear transport element 110 to the circular path by means of the rotation of the rotatable disc 140. When entering the recess, the orientation member 192 of the carrier B is guided along the engagement region 136 and thereby turns into the recess. Afterwards, the orientation feature 192 of the carrier 190 interacts with the circular boundary 134. Thereby, a predefined orientation of the carrier is achieved and maintained when the carrier is transported by the turntable 130 between a first linear transport element and a second linear transport element.

In other words, carrier B is pushed by the rotatable disc 140 of the turntable 130 into the transport direction 144 of the turntable 130, thereby changing its orientation. By being pushed forward, an orientation member 194 of the carrier B is pressed against the engagement region 136 of the circular boundary 134. By interaction of the orientation member 194 of a carrier 190 with the circular boundary 134 starting at the engagement region 136, the orientation of the carrier in a recess is modulated such that, e.g., a bar code attached to the body 192 of a carrier is placed at a predetermined location in relation to the movement direction of the carrier, such that it can be visually detected from the outside of the turntable while the carrier is being transported within the turntable.

On the same time, since the recess behind the recess that is occupied by carrier B is free, the gate mechanism 160 allows the newly arriving carrier C to enter the first transition zone 170.

Fig. 1e shows the transport system 100 in a fifth state occurring shortly after the fourth state shown in Fig. 1d. In this state, carrier C enters a recess, similar to carrier B in Fig. 1c, i.e. being guided by the lever 150 in its first position and by the engagement region 136 of the circular boundary 134, which interacts with the orientation member 194 of the carrier C. Finally, carriers A, B, C, and D are held by the turntable and can be transferred to the second linear transport element 120 or another subsequent linear transport element (not shown). In a second transition zone 172 next to the second transport element 120, an arriving carrier is moved on the second transport element and is then transported along the second direction 122 out of its recess and away from the turntable. The movement along the second transport element may be caused by a conveyor. Similar to the orientation control when entering the turntable, the orientation member 194 of a carrier interacts with a second engagement region 138 such that the carrier leaves the turntable in a pre-defined orientation.

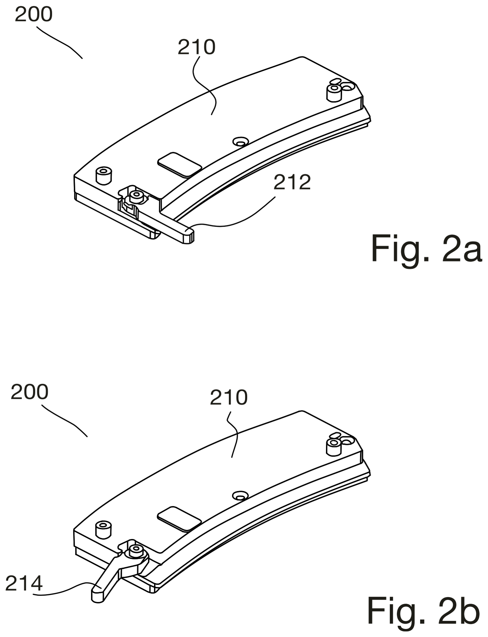

Fig. 2a and Fig. 2b show an guiding element 200 with an entry lever for a turntable of a system with a turntable in two states according to an embodiment of the disclosure. The element 200 comprises a first part 210, which can be, e.g., part of a turntable or arranged next to a turntable. The first part 210 comprises a lever 212, 214. The lever can be opened in a pre-defined range defined by a first position 212 and by a second position 214. This pre-defined range can be adjustable in order to fine tune its effect on the orientation of an entering carrier. The fine tuning can, e.g., be realized by a screw, which modulates a stop position of the lever. Figure 1a shows the lever in its open position 212, allowing entry of an incoming carrier when being arranged on or next to a turntable.

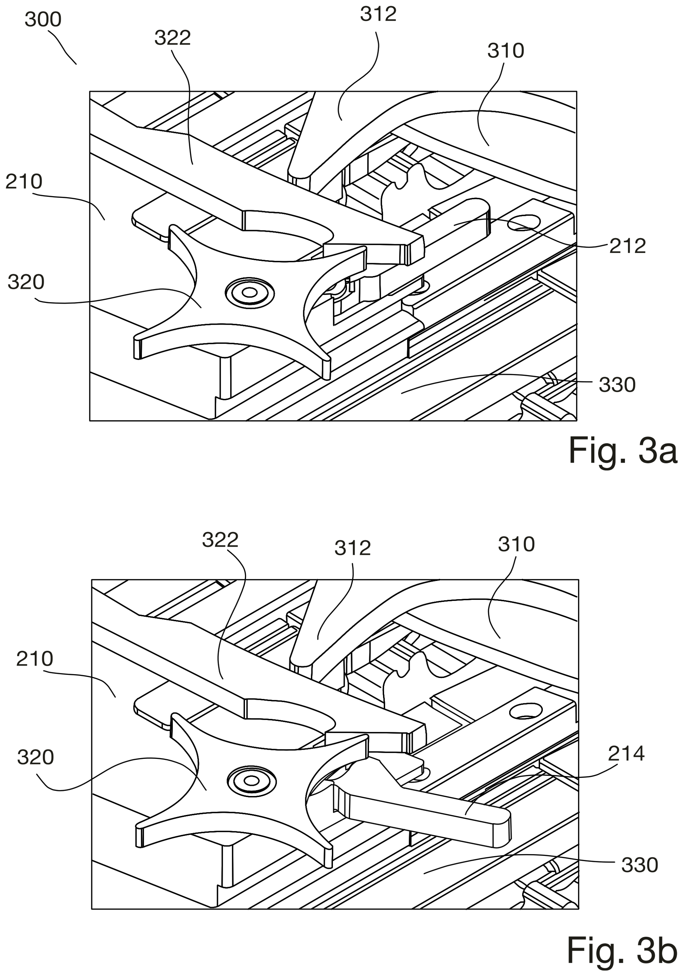

Fig. 3a and Fig. 3b show a detail-view of a transport system 300a with a guiding element, e.g. the guiding element 200 of Figs. 2a, 2b. The transport system 300 comprises a turntable that is equipped with a rotatable disc having recesses 310 for carriers separated by tooth-shaped walls 312. Furthermore, the system comprises a gate mechanism with a separation wheel 320 which can be blocked and released by a control lever 322. The lever 212, 214 is arranged below the separation wheel 320 and the control lever 322 . Fig. 3a shows the lever element 210 with the lever configured in a first position 212, in which a carrier arriving from the first transport element 330 is guided into the recess 310 of the rotatable disc. Fig. 3b shows the lever in its second position 214, in which it does not block carriers, which are already hosted in a recess of the rotatable disc of the turntable and which are passing the entry zone.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

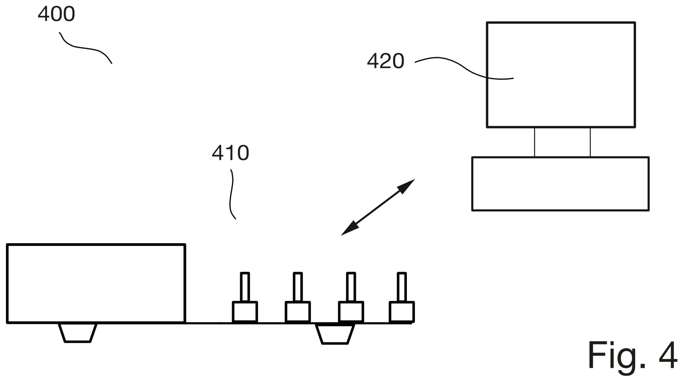

Some embodiments relate to a transport system comprising a system as described in connection with one or more of the Figs. 1 to 3. Alternatively, a transport system may be part of or connected to a system as described in connection with one or more of the Figs. 1 to 3. Fig. 4 shows a schematic illustration of a system 400 configured to perform a method described herein. The system 400 comprises a transport system 410 and a computer system 420. The transport system 410 is configured to take images and is connected to the computer system 420. The computer system 420 is configured to execute at least a part of a method described herein. The computer system 420 may be configured to execute a machine learning algorithm. The computer system 420 and transport system 410 may be separate entities but can also be integrated together in one common housing. The computer system 420 may be part of a central processing system of the transport system 410 and/or the computer system 420 may be part of a subcomponent of the transport system 410, such as a sensor, an actor, a camera or an illumination unit, etc. of the transport system 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a transport system or a transport system component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact discs (CD), flash memory cards, digital video disc (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

A transport system 100 may comprise a turntable comprising a drive system configured to move the rotatable disc; and a clutch configured to decouple the drive system from the rotatable disc if a pre-defined decoupling-force is exceeded.

The drive system is configured to propel the rotational movement of the rotatable disc. The drive component and the rotatable disc are interconnected by means of the clutch, which, particularly, can be designed as a claw coupling or ratchet coupling. Other possible embodiments of the clutch are, for example, a clutch with a spring pressure piece, a clutch with magnets etc. In the drive system, a drive component, for example, the drive component or actuator of the transportation device or the independent drive component or actuator as mentioned above, and the clutch can be combined to an integrated assembly module of the turntable. Alternatively or additionally, the clutch can be integrated with a transmission, particularly, the transmission mentioned above.

The clutch can comprise a first clutch element fixedly connected to a drive shaft of the drive system or the drive component, respectively, and a second clutch element fixedly connected to the rotatable disc. In a completely closed or coupled state of the clutch, first and second clutch element are engaged with each other, so a full amount of torque provided by the drive system is used to rotate the rotatable disc. In a completely open or decoupled state of the clutch, first and second clutch element can be rotated relative to each other, so that none of the torque provided by the drive system is used to rotate the rotatable disc. Optionally, the clutch can further be configured to be operated in a partially opened or partially closed state, wherein it is operated with slip between first and second clutch element. In this case, first and second clutch element are in contact to each other but can be rotated relative to each other, so that the torque provided by the drive system is partially used to rotate the rotatable disc. The clutch is operated in the closed/coupled mode, in the open/decoupled mode or in the slip mode, depending on an external wheel braking force applied to the guiding and/or holding wheel.

### List of reference signs

- 100: transport system
- 110: first linear transport element
- 112: first transport direction
- 120: second linear transport element
- 122: second transport direction
- 130: turntable
- 132: base plate of turntable
- 134: circular boundary of turntable
- 136: first engagement region
- 138: second engagement region
- 140: rotatable disc
- 142: rotation axis
- 144: rotation direction
- 146: tooth of rotatable disc
- 148: recess for carrier
- 150: guiding element
- 152: mounting axis of guiding element
- 160: gate mechanism
- 162: separation wheel
- 164: turning axis of separation wheel
- 166: control lever
- 168: rotation axis of control lever
- 170: first transition zone
- 172: second transition zone
- 190: carrier
- 192: body of carrier
- 194: orientation member
- 196: orientation member
- 198: longitudinal axis
- 200: guiding element
- 210: first part
- 212: lever of guiding element in first position
- 214: lever of guiding element in second position
- 300: transport system
- 310: recess of a rotatable disc of the turntable
- 312: tooth-shaped walls of between the recesses
- 320: separation wheel
- 322: control lever
- 330: linear transport element

## Claims

1. A transport system (100) for transporting carriers (190),
comprising:
- a first linear transport element (110), configured to transport carriers (190) along a linear path (112),
- a turntable (130), configured to transport carriers along a circular path (144), wherein the turntable comprises a rotatable disc (140) comprising a plurality of recesses (148), each configured to hold a single carrier,
wherein the first linear transport element and the turntable are positioned adjacent to each other to enable a transfer of a first carrier, the first carrier being transported on the first linear transport element, from the first linear transport element to a first recess of the rotatable disc,
- a guiding element (150), configured to constrain an angular displacement of the first carrier about a longitudinal axis of the first carrier when the first carrier is transferred to the first recess of the rotatable disc.

2. The transport system of claim 1,
wherein the turntable (130) is configured to transport the first carrier (190) along the circular path (144) by means of a rotation of the rotatable disc (140) around a rotational axis of the rotatable disc.

3. The transport system of claim 2,
wherein the turntable (130) comprises a circular boundary (134), the circular boundary (134) surrounding the rotational axis of the turntable (130) at least partially, and
wherein the circular boundary comprises a first engagement region (136), which is configured to interact with the first carrier (190) thereby causing an angular displacement of the first carrier about the longitudinal axis into a predetermined angular position when the first carrier is transferred from the linear path (112) to the circular path by means of the rotation of the rotatable disc.

4. The transport system of claim 3,
wherein the circular boundary (134) is configured to interact with a first orientation member (192) of the first carrier (190) thereby causing the angular displacement of the first carrier about the longitudinal axis into the predetermined angular position when the first carrier is transferred from the linear path (112) to the circular path by means of the rotation of the rotatable disc (140), and/or
wherein the guiding element (150) is configured to interact with a second orientation member of the first carrier to constrain the angular displacement of the first carrier about the longitudinal axis when the first carrier is transferred into the first recess of the rotatable disc.

5. The transport system of claim 4,
wherein the first carrier (190) comprises a body with a first component, wherein the first component comprises a substantially circular cross-section taken perpendicular to the longitudinal axis of the first carrier, and
wherein the body comprises the first orientation member (192), wherein the first orientation member (192) comprises a protrusion extending from the body beyond the perimeter of the circular cross-section in a plane parallel to the circular cross-section.

6. The transport system of any of the preceding claims,
wherein the first recess of the rotatable disc (140) is defined by a leading flank and a trailing flank, the leading flank being less steep than the trailing flank.

7. The transport system of the preceding claims 5 or 6,
wherein the first linear transport element (110) comprises a linear transporting surface and the turntable (130) comprises a circular transporting surface,
wherein the linear transporting surface and the circular transporting surface are arranged on a first plane;
wherein the rotatable disc (140) is arranged on a second plane,
wherein the first plane and the second plane are parallel with one another and distanced from one another, such that, in operation, when the first carrier is transported on the circular transporting surface, the body of the carriers, in particular the first component of the body, interacts with a recess of the rotatable disc such that the carrier is moved along the circular path by means of the rotational movement of the rotatable disc; and
wherein, in operation, the guiding element (150) is arranged between the first plane and the second plane or above the second plane.

8. The transport system of any of the preceding claims 3 to 7,
wherein the guiding element comprises a lever (150), adapted to pivot between
a first position (212), in which the lever is oriented essentially parallel to the first linear transport element, and
a second position (214), in which the lever is oriented essentially tangential to the circular boundary (134) of the turntable.

9. The transport system of claim 8,
wherein, in the first position (212), the guiding element (150) is adapted to interact with the body and/or the orientation member (192) of the first carrier (190) to constrain the angular displacement of the first carrier about the longitudinal axis when the first carrier is transferred into the first recess of the rotatable disc (140), and
wherein, in the second position (214), the guiding element enables unimpeded passage of carriers along the circular path.

10. The transport system of any of the preceding claims,
wherein the first linear transport element (110) and the turntable (130) spatially overlap at a first transition zone (170), and
wherein
at the first transition zone the first carrier (190) is transferable from the linear path (112) of the first linear transport element to the circular path of the turntable, and
a second carrier is movable within a second recess of the rotatable disc (140) through the first transition zone (170) along the circular path of the turntable.

11. The transport system of claim 10,
wherein, if the guiding element (150) is in the first position (212), the guiding element is moved from the first position into the second position (214), when the second carrier enters the first transition zone (170), and
if the guiding element is in the second position, the guiding element is moved from the second position to the first position, when the first carrier enters the first transition zone.

12. The transport system of any of the preceding claims,
further comprising a gate mechanism (160) configured to control a movement of the first carrier, the first carrier being transported on the first linear transport element to the turntable,
wherein the gate mechanism enables unimpeded passage of the first carrier along the first transport element towards the first transition zone (170), if the first recess is unoccupied by another carrier and if the first recess is positioned such that a time required to move the first recess into the transition zone by means of the rotation of the rotatable disc is equal to a time required to move the first carrier from the gate mechanism to the transition zone,
and wherein the gate mechanism further prevents the first carrier from moving past the gate mechanism towards the turntable if the first recess is already occupied by another carrier.

13. The transport system of claim 12,
wherein the first linear transport element (110) comprises a conveyor for conveying the first carrier along the linear path (112) towards the turntable (130), and
wherein a speed of the conveyor, a speed of the rotation of the rotatable disc (140) and a position of the gate mechanism (160) are selected such that, the first carrier, when the gate mechanism enables unimpeded passage of the first carrier to move towards the first transition zone (170), is, when entering the first recess, first contacting the leading flank of the first recess.

14. The transport system of any of the preceding claims,
further comprising a second linear transport element (120), configured to transport carriers (190) along a second linear path (122),
wherein the turntable (130) and the second linear transport element (120) spatially overlap at a second transition zone (172), and
wherein, at the second transition zone, the first carrier (190) is transferrable from the circular path to the second linear path of the second linear transport element.

15. The transport system of claim 14,
wherein the circular boundary (134) comprises a second engagement region (138), which is configured to interact with the first carrier (190) and/or the second carrier (190), thereby causing an angular displacement of the first carrier (190) and/or the second carrier (190) about the longitudinal axis into a predetermined angular position when the first carrier or the second carrier is transferred from the circular path to the second linear path by means of the second linear transport element (120).

16. A method for controlling the orientation of carriers transported on a transport system according to any one of the preceding claims.
